# EUROPEAN PATENT SPECIFICATION

(11) **EP 3 055 713 B1**
(45) Date of publication and mention of the grant of the patent: **29.04.2020**
(21) Application number: 14787244.4
(22) Date of filing: 10.10.2014
(51) Int. Cl.: G01T 1/18

(54) **IMPROVED GEIGER-MÜLLER TUBE**
VERBESSERTE GEIGER-MÜLLER RÖHRE
TUBE GEIGER-MÜLLER AMÉLIORÉ

(30) Priority: 11.10.2013 GB 201318051
(43) Date of publication of application: 17.08.2016
(73) Proprietor: Johnson Matthey Public Limited Company, London EC4A 4AB (GB)
(72) Inventor: SHARPE, Aaron, Surrey GU2 7XH (GB)
(74) Representative: Atkinson, Ian Anthony
(86) International application number: PCT/GB2014/053060
(87) International publication number: WO 2015/052539

(56) References cited:
- FR-A1- 2 524 703
- US-A- 3 892 990
- US-A- 4 354 135
- Nils Wiberg: "Lehrbuch der Anorganischen Chemie", 31 December 1985 (1985-12-31), Walter De Gruyter, Berlin New York, XP002733598, ISBN: 3-11-007511-3 vol. 91-100, pages 1204-1206, page 1204 - page 1206

## Description

The present invention concerns Geiger-Müller (GM) tubes, in particular halogen-quenched GM tubes and improvements in their manufacture.

GM tubes include a container filled to a low pressure with a noble gas, a cathode and an anode. The performance of a GM tube is enhanced by the addition of a trace amount of a quench gas, typically a halogen, which is present to quench the ionisation of noble gas molecules to reduce the occurrence of spurious ionisation events which may affect the output of the GM tube. Metal Geiger tubes are typically manufactured from stainless steel. The walls of the tube usually form the cathode whilst the anode is a wire located centrally within the tube. Stainless steel may corrode as a result of prolonged contact with chlorine or bromine, which are typically used as quench gases. For that reason, the internal walls of the tube may be coated with a thin layer of platinum in order to protect the steel from contact with the quench gas. A known problem with platinum-coated GM tubes is that the halogen quench gas may become depleted over time. It is an object of the invention to provide a GM tube which exhibits a reduced amount of halogen depletion.

US3892990 discloses a Geiger-Müller tube having an enclosed container with a metal wall forming a cathode, comprising a layer of platinum, a metal anode spaced from said cathode and the container filled with a mixture of a noble gas and a halogen comprising chlorine, bromine or a mixture thereof to a pressure equal to or less than 0.2 atm. The platinum layer is formed with a layer of platinum oxide with absorbed bromine ions.

According to the invention, we provide a Geiger-Müller tube as defined in claim 1.

By providing a surface layer of platinum tetrachloride (PtCl₄) or platinum tetrabromide (PtBr₄) on the platinum surface, the surface of the cathode becomes resistant to reaction with halogen, e.g. chlorine, so that halogen supplied as a quench gas is not removed from the atmosphere within the GM tube through reaction with the platinum. This greatly reduces or eliminates the failure of the GM tube by depletion of halogen, e.g. chlorine, through reaction with the cathode surface. In a preferred embodiment, the halogen is chlorine and the surface layer comprises platinum tetrachloride.

The surface layer may have an average thickness of from 10 to 100 nm. It is preferred that the minimum thickness of the surface layer of platinum tetrachloride and/or platinum tetrabromide is at least 10 nm.

The GM tube is of conventional construction. Typically the tube is made from a cylinder of metal which is often a stainless steel. The size of the GM tube may vary widely. GM tubes having a length from about 5mm to about 300 mm are known commercially. The invention is not limited by the size or shape of the GM tube. The steel is coated on the interior-facing surface with a layer of platinum, which typically has a thickness between 1 and 100 microns. The platinum layer may be formed by electroplating or by other means known in the art. The ends of the tube are sealed by end caps made from a material such as glass or a ceramic material. The end caps are joined to the metal walls of the tube by a gas-tight join, for example by soldering. The end caps or sealing material may support the anode, typically in the form of a metal wire located at the centre of the tube.

The GM tube is filled with a gas mixture comprising a noble gas and a halogen, i.e. chlorine or bromine, to a pressure of equal to or less than 0.2 atmospheres. The GM tube may be filled with said gas mixture to a pressure of less than 0.2 atmospheres. The GM tube may be filled with said gas mixture to a pressure of less than 0.1 atmospheres. The gas mixture may comprise about 1 - 3 mol% of halogen, i.e. chlorine or bromine. Other gaseous compounds apart from chlorine, bromine and the noble gas may be present in trace amounts.

The PtCl₄ or PtBr₄ layer may cover the entire surface of the platinum, or it may cover only a portion of the surface. Preferably at least 50%, more preferably at least 75% of the surface of the platinum is covered by PtCl₄ and/or PtBr₄.

A layer of another platinum compound may be present between the platinum metal surface and the PtCl₄. This other platinum compound may comprise a platinum dihalide such as platinum dichloride (PtCl₂) or platinum dibromide (PtBr₂). When the halogen is chlorine, it is preferred that at least 50% of the surface of the PtCl₂, if present, is covered by PtCl₄. At least 75% of the surface of the PtCl₂, if present, may be covered by PtCl₄. When the halogen is bromine, it is preferred that at least 50% of the surface of the PtBr₂, if present, is covered by PtBr₄. At least 75% of the surface of the PtBr₂, if present, may be covered by PtBr₄.

According to the invention, a method of manufacturing a GM tube comprises the steps as defined in claim 8 of:
a) forming a container having at least one metal wall suitable for forming a cathode and having a metal anode located spaced apart from said cathode, said metal wall comprising a layer of platinum facing the interior of the container, and means to means to apply a voltage between said anode and said cathode,
b) filling the container with a gas containing a halogen selected from chlorine, bromine or a mixture of chlorine and bromine;
c) contacting the interior surface of the container with said gas at a temperature in the range 200 - 300 °C,
d) maintaining said contact until the reaction of the available surface of the cathode with the halogen-containing gas has attained a steady state, to form a treated container;
   wherein said platinum layer comprises a surface layer of platinum tetrachloride or platinum tetrabromide;
e) evacuating the container;
f) filling the treated enclosed container with a mixture of a noble gas and a halogen comprising chlorine, bromine or a mixture thereof, to a pressure of equal to or less than 0.2 atmospheres, and
g) sealing the container.

The steps b - e may be repeated one or more times.

Step c may be performed at a temperature in the range 200 - 300 °C. Step c may be performed at a temperature in the range 250 - 300 °C.

The halogen-containing gas may comprise substantially pure chlorine, pure bromine, a mixture of chlorine and bromine or alternatively, the chlorine and/or bromine may be diluted with another, preferably inert, gas, such as nitrogen or a noble gas. A preferred halogen is chlorine.

The objective of step d is to react the surface of the platinum layer with chlorine or bromine until all or substantially all of the reactive platinum species at the surface have reacted fully with chlorine or bromine to form PtCl₄ or PtBr₄.

The contact of the halogen- (chlorine or bromine) containing gas may be maintained until the concentration of halogen in the container is stable, i.e. so that the halogen concentration remains substantially constant at the contact temperature of 200 - 300 °C. This may be measured by measuring the concentration of halogen in the container. Alternatively a halogen-containing gas may be flowed through the container. The amount of halogen in the halogen-containing gas flowing from the container may be monitored to determine when the reaction of halogen with the cathode surface has attained a steady state.

In an embodiment of the method of the invention, the contact of chlorine- and/or bromine-containing gas is maintained until the platinum comprises a surface layer of platinum tetrachloride or platinum tetrabromide having a thickness of at least 10 nm.

The platinum may react with the chlorine-containing gas to form PtCl₂. PtCl₂ may react with the chlorine gas to form PtCl₄. Therefore the reaction of the cathode with the chlorine-containing gas may be a reaction of chlorine with platinum metal or with one or more compounds of platinum to form PtCl₄. The platinum may react with the bromine-containing gas, if present, to form PtBr₂. PtBr₂ may react with the bromine gas to form PtBr₄. Therefore the reaction of the cathode with the bromine-containing gas may be a reaction of bromine with platinum metal or with one or more compounds of platinum to form PtBr₄.

We have found that PtCl₂ may be formed at temperatures above about 350 °C. Its formation may be through the mechanism of thermal decomposition of PtCl₄. When, however, a cathode surface comprising PtCl₂ is used in the finished GM tube containing a low pressure noble gas with a predetermined amount of chlorine as a quench gas, the PtCl₂ may react with the chlorine to reduce the available quench gas in the GM tube. In order that this problem can be avoided the method of the invention involves contact of the cathode surface with a chlorine-containing gas at a temperature at or below 350 °C so that PtCl₄ is formed as a surface layer. The invention has been described with reference to chlorine. Bromine may be present in the GM tube as a quench gas either in combination with chlorine or as an alternative to chlorine. Bromine also reacts with platinum and platinum compounds to form PtBr₂ and PtBr₄.

The GM tube is filled with a gas mixture comprising a noble gas and halogen to a pressure of equal to or less than 0.2 atmospheres. The GM tube may be filled with said gas mixture to a pressure of less than 0.2 atmospheres. The GM tube may be filled with said gas mixture to a pressure of less than 0.1 atmospheres. The gas mixture may comprise about 1 - 3 mol% of halogen. Other gaseous compounds apart from the halogen and the noble gas may be present in trace amounts.

In a typical manufacturing process, the tube will be formed from a stainless steel cylinder of the desired diameter and length. The tube will typically be cleaned using solvents prior to plating with platinum. The tube may then be electroplated with platinum. After the plating process the tube then has the end cap(s) and a filling spout attached. The filling spout is a temporary structure which enables the tube to be filled with gas and evacuated. The tube then undergoes a passivation and filling process. This step is typically carried out as a batch process with many tubes connected to a single fill line. Typically the tubes are heated to a temperature between 200 and 300 °C, for example about 275 °C, and cyclically saturated with the quench gas species, e.g. chlorine, and then evacuated until passivation is considered complete. After this, the final step is to fill with the low pressure fill gas mix and seal off the tube by sealing and optionally removing the filling spout.

## Claims

1. A Geiger-Müller tube comprising an enclosed container having at least one metal wall forming a cathode, said metal wall comprising a layer of platinum, a metal anode spaced from said cathode, and means to apply a voltage between said anode and said cathode, said enclosed container being filled with a mixture of a noble gas and a halogen comprising chlorine, bromine or a mixture thereof, to a pressure of equal to or less than 0.2 atmospheres, **characterised in that** said platinum layer comprises a surface layer of platinum tetrachloride and/or platinum tetrabromide.

2. A Geiger-Müller tube according to claim 1, wherein said enclosed container is filled with a mixture of a noble gas and a halogen comprising chlorine, bromine or a mixture thereof, to a pressure of less than 0.2 atmospheres.

3. A Geiger-Müller tube according to claim 1 or claim 2, wherein said metal wall comprises a first metal layer and a second metal layer, said second metal layer overlaying the surface of said first metal layer on the interior of said enclosed container.

4. A Geiger-Müller tube according to any one of the preceding claims, wherein said surface layer comprises platinum tetrachloride.

5. A Geiger-Müller tube according to any one of claims 1 to 3, wherein said surface layer comprises platinum tetrabromide.

6. A Geiger-Müller tube according to any one of the preceding claims, wherein said surface layer has a thickness of at least 10 nm.

7. A Geiger-Müller tube according to any one of the preceding claims, wherein the gas mixture comprises 1 - 3 mol% of halogen.

8. A method of manufacturing a Geiger-Müller tube comprising the steps of:
a) forming a container having at least one metal wall suitable for forming a cathode and having a metal anode located spaced apart from said cathode, said metal wall comprising a layer of platinum facing the interior of the container, and means to means to apply a voltage between said anode and said cathode,
b) filling the container with a gas containing a halogen selected from chlorine, bromine or a mixture of chlorine and bromine;
c) contacting the interior surface of the container with said gas at a temperature in the range 200 - 300 °C,
d) maintaining said contact until the reaction of the available surface of the cathode with the halogen-containing gas has attained a steady state, to form a treated container;
wherein said platinum layer comprises a surface layer of platinum tetrachloride and/or platinum tetrabromide;
e) evacuating the container;
f) filling the treated enclosed container with a mixture of a noble gas and a halogen comprising chlorine, bromine or a mixture thereof, to a pressure equal to or less than 0.2 atmospheres, and
g) sealing the container.

9. A method according to claim 8, wherein steps b) to e) are repeated one or more times.

10. A method according to claim 8 or claim 9, wherein, in step f) the treated enclosed container is filled with a mixture of a noble gas and a halogen comprising chlorine, bromine or a mixture thereof, to a pressure less than 0.2 atmospheres.

11. A method according to any one of claims 8 to 10, wherein, in step d) the contact between surface of the cathode and the halogen-containing gas is maintained until said surface comprising the a layer of PtCl₄ or PtBr₄ has a thickness of at least 10 nm.

12. A method according to any one of claims 8 to 11, wherein the gas mixture comprises 1 - 3 mol% of halogen.

13. A method according to any one of claims 8 to 12, wherein the halogen is chlorine.

## Patentansprüche

1. Geiger-Müller-Zählrohr, das einen umschlossenen Behälter umfasst, welcher mindestens eine Metallwand, die eine Kathode bildet, wobei die Metallwand eine Platinschicht umfasst, eine Metallanode, die von der Kathode beabstandet ist, und Mittel aufweist, um zwischen der Anode und der Kathode eine Spannung anzulegen, wobei der umschlossene Behälter mit einer Mischung aus einem Edelgas und einem Halogen, umfassend Chlor, Brom oder eine Mischung davon, bis zu einem Druck von höchstens 0,2 Atmosphären befüllt ist, **dadurch gekennzeichnet, dass** die Platinschicht eine Oberflächenschicht aus Platintetrachlorid und/oder Platintetrabromid umfasst.

2. Geiger-Müller-Zählrohr gemäß Anspruch 1, wobei der umschlossene Behälter mit einer Mischung aus einem Edelgas und einem Halogen, umfassend Chlor, Brom oder eine Mischung davon, bis zu einem Druck von weniger als 0,2 Atmosphären befüllt ist.

3. Geiger-Müller-Zählrohr gemäß Anspruch 1 oder Anspruch 2, wobei die Metallwand eine erste Metallschicht und eine zweite Metallschicht umfasst, wobei die zweite Metallschicht im Inneren des umschlossenen Behälters flächig auf der Oberfläche der ersten Metallschicht angeordnet ist.

4. Geiger-Müller-Zählrohr gemäß einem beliebigen der vorhergehenden Ansprüche, wobei die Oberflächenschicht Platintetrachlorid umfasst.

5. Geiger-Müller-Zählrohr gemäß einem beliebigen der Ansprüche 1 bis 3, wobei die Oberflächenschicht Platintetrabromid umfasst.

6. Geiger-Müller-Zählrohr gemäß einem beliebigen der vorhergehenden Ansprüche, wobei die Oberflächenschicht eine Dicke von mindestens 10 nm hat.

7. Geiger-Müller-Zählrohr gemäß einem beliebigen der vorhergehenden Ansprüche, wobei die Gasmischung 1 bis 3 Mol.-% an Halogen umfasst.

8. Verfahren zur Herstellung eines Geiger-Müller-Zählrohrs, wobei es die folgenden Schritte umfasst:
a) Bilden eines Behälters, der mindestens eine Metallwand, welche sich dazu eignet, eine Kathode zu bilden, wobei eine Metallanode beabstandet von der Kathode angeordnet ist, wobei die Metallwand eine Schicht aus Platin umfasst, welche dem Inneren des Behälters zugewandt ist, sowie Mittel aufweist, um zwischen der Anode und der Kathode eine Spannung anzulegen,
b) Befüllen des Behälters mit einem Gas, das ein Halogen enthält, welches aus Chlor, Brom oder einer Mischung von Chlor und Brom ausgewählt ist;
c) Inkontaktbringen der Innenfläche des Behälters mit dem Gas bei einer Temperatur im Bereich von 200 bis 300 °C,
d) Aufrechterhalten des Kontakts, bis die Reaktion der verfügbaren Oberfläche der Kathode mit dem halogenhaltigen Gas einen stabilen Zustand erreicht hat, um einen behandelten Behälter zu bilden; wobei die Platinschicht eine Oberflächenschicht aus Platintetrachlorid und/oder Platintetrabromid umfasst;
e) Evakuieren des Behälters;
f) Befüllen des behandelten umschlossenen Behälters mit einer Mischung aus einem Edelgas und einem Halogen, umfassend Chlor, Brom oder eine Mischung davon, bis zu einem Druck von höchstens 0,2 Atmosphären; und
g) festes Verschließen des Behälters.

9. Verfahren nach Anspruch 8, wobei die Schritte b) bis e) einmal oder mehrmals wiederholt werden.

10. Verfahren nach Anspruch 8 oder Anspruch 9, wobei in Schritt f) der behandelte umschlossene Behälter mit einer Mischung aus einem Edelgas und einem Halogen, umfassend Chlor, Brom oder eine Mischung davon, bis zu einem Druck von weniger als 0,2 Atmosphären befüllt wird.

11. Verfahren gemäß einem beliebigen der Ansprüche 8 bis 10, wobei in Schritt d) der Kontakt zwischen der Oberfläche der Kathode und dem halogenhaltigen Gas aufrechterhalten wird, bis die Oberfläche, welche die Schicht aus PtCl₄ oder PtBr₄ umfasst, eine Dicke von mindestens 10 nm hat.

12. Verfahren gemäß einem beliebigen der Ansprüche 8 bis 11, wobei die Gasmischung 1 bis 3 Mol.-% an Halogen umfasst.

13. Verfahren gemäß einem beliebigen der Ansprüche 8 bis 12, wobei es sich bei dem Halogen um Chlor handelt.

## Revendications

1. Tube Geiger-Müller comprenant un récipient fermé présentant au moins une paroi métallique formant une cathode, ladite paroi métallique comprenant une couche de platine, une anode métallique située à distance de ladite cathode et des moyens pour appliquer une tension entre ladite anode et ladite cathode, ledit récipient fermé étant rempli d'un mélange d'un gaz noble et d'un halogène comprenant le chlore, le brome ou un mélange de ceux-ci, à une pression égale ou inférieure à 0,2 atmosphère, **caractérisé en ce que** ladite couche de platine comprend une couche de surface de tétrachlorure de platine et/ou de tétrabromure de platine.

2. Tube Geiger-Müller selon la revendication 1, ledit récipient fermé étant rempli d'un mélange d'un gaz noble et d'un halogène comprenant le chlore, le brome ou un mélange de ceux-ci, à une pression inférieure à 0,2 atmosphère.

3. Tube Geiger-Müller selon la revendication 1 ou la revendication 2, ladite paroi métallique comprenant une première couche métallique et une deuxième couche métallique, ladite deuxième couche métallique recouvrant la surface de ladite première couche métallique sur l'intérieur dudit récipient fermé.

4. Tube Geiger-Müller selon l'une quelconque des revendications précédentes, ladite couche de surface comprenant du tétrachlorure de platine.

5. Tube Geiger-Müller selon l'une quelconque des revendications 1 à 3, ladite couche de surface comprenant du tétrabromure de platine.

6. Tube Geiger-Müller selon l'une quelconque des revendications précédentes, ladite couche de surface présentant une épaisseur d'au moins 10 nm.

7. Tube Geiger-Müller selon l'une quelconque des revendications précédentes, le mélange gazeux comprenant 1-3% en mole d'halogène.

8. Procédé pour la fabrication d'un tube Geiger-Müller, comprenant les étapes de :
a) formation d'un récipient présentant au moins une paroi métallique appropriée pour former une cathode et présentant une anode métallique située à distance de ladite cathode, ladite paroi métallique comprenant une couche de platine orientée vers l'intérieur du récipient et des moyens pour appliquer une tension entre ladite anode et ladite cathode,
b) remplissage du récipient par un gaz contenant un halogène choisi parmi le chlore, le brome ou un mélange de chlore et de brome ;
c) mise en contact de la surface interne du récipient avec ledit gaz à une température dans la plage de 200-300°C,
d) maintien dudit contact jusqu'à ce que la réaction de la surface disponible de la cathode avec le gaz contenant de l'halogène ait atteint un état stationnaire pour former un récipient traité ;
ladite couche de platine comprenant une couche de surface de tétrachlorure de platine et/ou de tétrabromure de platine ;
e) mise sous vide du récipient ;
f) remplissage du récipient fermé traité par un mélange d'un gaz noble et d'un halogène comprenant le chlore, le brome ou un mélange de ceux-ci, à une pression égale ou inférieure à 0,2 atmosphère et
g) fermeture étanche du récipient.

9. Procédé selon la revendication 8, les étapes b) à e) étant répétées une ou plusieurs fois.

10. Procédé selon la revendication 8 ou la revendication 9, où, dans l'étape f), le récipient fermé traité est rempli par un mélange d'un gaz noble et d'un halogène comprenant le chlore, le brome ou un mélange de ceux-ci, à une pression inférieure à 0,2 atmosphère.

11. Procédé selon l'une quelconque des revendications 8 à 10, où, dans l'étape d), le contact entre la surface de la cathode et le gaz contenant de l'halogène est maintenu jusqu'à ce que ladite surface comprenant la couche de PtCl₄ ou de PtBr₄ présente une épaisseur d'au moins 10 nm.

12. Procédé selon l'une quelconque des revendications 8 à 11, le mélange gazeux comprenant 1-3% en mole d'halogène.

13. Procédé selon l'une quelconque des revendications 8 à 12, l'halogène étant le chlore.
